## Europäisches Patentamt
## European Patent Office
## Office européen des brevets

(19)

(11) Veröffentlichungsnummer: **0 151 766**
**B1**

(12) ## EUROPÄISCHE PATENTSCHRIFT

(45) Veröffentlichungstag der Patentschrift:
26.11.86

(51) Int. Cl.⁴: **C 08 G 65/20**

(21) Anmeldenummer: **84115712.6**

(22) Anmeldetag: **18.12.84**

(54) **Verfahren zur Herstellung von Polyoxybutylen-polyoxyalkylenglykolcarbonsäurediester.**

(30) Priorität: **21.01.84 DE 3402027**

(43) Veröffentlichungstag der Anmeldung:
**21.08.85 Patentblatt 85/34**

(45) Bekanntmachung des Hinweises auf die Patenterteilung:
**26.11.86 Patentblatt 86/48**

(84) Benannte Vertragsstaaten:
**BE DE FR GB IT NL**

(56) Entgegenhaltungen:
**EP-A-0 003 112**
**GB-A-854 958**
**US-A-4 251 654**
**US-A-4 329 445**

(73) Patentinhaber: **BASF Aktiengesellschaft, Carl-Bosch- Strasse 38, D-6700 Ludwigshafen (DE)**

(72) Erfinder: **Mueller, Herbert, Dr., Carostrasse 53, 6710 Frankenthal (DE)**

LIBER, STOCKHOLM 1986

EP 0 151 766 B1

## Beschreibung

Die Verwendung von Bleicherde zur Vorbehandlung und Polymerisation von Tetrahydrofuran ist bekannt.

Nach Angaben der EP-A-3112 (US-A-4 189 566) werden Polyoxybutylenglykolcarbonsäurediester durch katalytische Polymerisation von vorbehandeltem Tetrahydrofuran in Gegenwart von Carbonsäureanhydrid und im wesentlichen wasserfreier Bleicherde als Katalysator in guten Ausbeuten hergestellt. Nachteilig an diesem Verfahren ist lediglich, daß die Reaktionsgeschwindigkeit verhältnismäßig klein ist.

Die US-A-4 127 513 und 4 228 272 vermitteln ferner die Lehre, daß unter Verwendung eines speziellen säureaktivierten Montmorillonits mit einem Porenvolumen von 0,4 bis 0,8 m³/g, einer Oberfläche von 220 bis 260 m²/g und einem durchschnittlichen Porendurchmesser von 0,1 bis 0,3 MikroMeter in Gegenwart von z.B. Wasser als Reglersubstanz Alkylenoxide und Tetrahydrofuran copolymerisiert werden können. Durch Anwendung dieser speziellen Montmorillonite können die sich bei der Copolymerisation als Nebenprodukte bildenden cyclischen Oligomeren auf einen Anteil von 4 bis 8 Gew.% gegenüber sonst üblichen 10 bis 15 Gew.% gesenkt werden. Dieser Gehalt ist jedoch immer noch zu hoch, um die erhaltenen Glykole für anspruchsvolle Anwendungen auf dem Polyurethangebiet einsetzen zu können. Die cyclischen Oligomeren sind ein inertes Material, das keine mit Isocyanatgruppen reagierende Hydroxylgruppen besitzt. Da die cyclischen Oligomeren in allem üblichen Lösungsmitteln sehr leicht löslich sind, können durch sie Verarbeitungsschwierigkeiten hervorgerufen oder die mechanischen Eigenschaften der Fertigprodukte nachteilig beeinflußt werden.

Aufgabe der vorliegenden Erfindung war es, Copolymere aus Tetrahydrofuran und 1,2-Alkylenoxiden herzustellen, die im wesentlichen keine linearen und insbesondere cyclischen Oligomeren enthalten und dadurch auch nicht zu den obengenannten Schwierigkeiten führen können.

Diese Aufgabe konnte überraschenderweise gelöst werden durch ein Verfahren zur Herstellung von Polyoxybutylen-polyoxyalkylenglykolcarbonsäurediester durch katalytische Copolymerisation von Tetrahydrofuran mit mindestens einem 1,2-Alkylenoxid, das dadurch gekennzeichnet ist, daß man Copolymerisation in Gegenwart von Carbonsäureanhydrid mit Bleicherde mit einem Wassergehalt von weniger als 3 Gew.% als Katalysator durchführt, wobei man das 1,2-Alkylenoxid im molaren Überschuß, bezogen auf das Tetrahydrofuran, anwendet.

Die nach dem erfindungsgemäßen Verfahren hergestellten Polyoxybutylen-polyoxyalkylenglykolcarbonsäurediester können durch Umesterung oder Verseifung der endständigen Estergruppen sehr leicht in die entsprechenden Glykole übergeführt werden.

Es war überraschend und aufgrund des bekannten Standes der Technik keineswegs zu erwarten, daß die Copolymerisation so eindeutig im Sinne des erfindungsgemäßen Verfahrens abläuft. So ist beispielsweise aus Houben-Weyl, Methoden der organischen Chemie, Band 6/3, Seite 482, (Georg-Thieme-Verlag, Stuttgart 1965) bekannt, daß 1,2-Alkylenoxide und Carbonsäureanhydride sich sehr leicht und mit hoher Geschwindigkeit, insbesondere in Gegenwart von Katalysatoren, zu Dicarbonsäureestern von 1,2-Di-olen umsetzen. Wie bereits dargelegt wurde, verläuft hingegen die Polymerisation von Tetrahydrofuran in Gegenwart von Bleicherde und Carbonsäureanhydriden zu Polyoxybutylenglykolcarbonsäurediester verhäLtnismäßig langsam. Es mußte daher angenommen werden, daß die beiden Reaktionen, nämlich die Bildung von 1,2-Diolcarbonsäurediester aus 1,2-Alkylenoxid und Carbonsäureanhydrid und die Tetrahydrofuranpolymerisation, nebeneinander ablaufen und keine Copolymerisation eintritt.

Da die gemannten US-Patentschriften und die GB-A-854 958 ferner die Lehre vermitteln, daß die Copolymerisation von Alkylenoxiden und Tetrahydrofuran mit Bleicherde als Katalysator nur in Gegenwart von Verbindungen mit reaktiven Wasserstoffatomen durchgeführt werden kann, bedurfte es zur Durchführung des erfindungsgemäßen Verfahrens der Überwindung eines erheblichen Vorurteils.

Das erfindungsgemäße Verfahren weist den Vorteil auf, daß bei der Copolymerisation praktisch keine Nebenprodukte, insbesondere keine cyclische Oligomere gebildet werden und die Reaktion zu einem vollständigen Umsatz des 1,2-Alkylenoxids führt. Die erhaltenen Copolymerisate besitzen eine äußerst niedrige Farbzahl, was sich sehr günstig auf die weitere Verarbeitung auswirkt. Die als Katalysator verwendeten Bleicherden haben eine extrem lange Lebensdauer und lassen sich ohne großen Aufwand von den Polyoxybutylenpolyoxyalkylenglykolcarbonsäurediestern abtrennen.

Zu den für das erfindungsgemäße Verfahren verwendbaren Ausgangskomponenten ist folgendes auszuführen:.

Als Monomere 1,2-Alkylenoxide und Tetrahydrofuran werden vorteilhafterweise wasserfreie oder zumindest solche verwendet, bei denen der Wassergehalt kleiner als 0,2 Gew.%, vorzugsweise kleiner als 0,1 Gew.% ist.

Als 1,2-Alkylenoxide kommen unsubstituierte oder substituierte, beispielsweise mit linearen oder verzweigten Alkylgruppen mit 1 bis 6, vorzugsweise 1 bis 2 C-Atomen, einem Phenylrest, mit Alkyl- und/oder Alkoxygruppen mit 1 bis 2 C-Atomen oder Halogenatomen substituierte Phenylreste oder mit Halogenatomen, vorzugsweise Chloratomen, substituierte in Betracht. Im einzelnen seien beispielhaft genannt: 1,2-Butylenoxid, 2,3-Butylenoxid, Styroloxid, Epichlorhydrin und vorzugsweise Ethylenoxid und 1,2-Propylenoxid. Die 1,2-Alkylenoxide können einzeln oder in Form von Mischungen, beispielsweise als Ethylenoxid-1,2-Propylenoxid-Mischungen, Anwendung finden.

Das zur Copolymerisation verwendete Tetrahydrofuran wird zweckmäßigerweise vor der Polymerisation mit starken Mineralsäuren, organischen Sulfonsäuren, Silikagel und vorzugsweise Bleicherden nach dem in der EP-OS 3112 beschriebenen Verfahren vorbehandelt.

Das Molverhältnis 1,2-Alkylenoxid zu Tetrahydrofuran wird in dem zu copolymerisierenden Monomerengemisch so eingestellt, daß das 1,2-Alkylen-oxid im molaren Überschuß vorliegt. Man wendet z.B. ein Molverhältnis von 1,2-Alkylenoxid zu Tetrahydrofuran von > 1:1 bis 100:1, insbesondere von > 1:1 bis 50:1 an.

Nach dem erfindungsgemäßen Verfahren wird die Copolymerisation in Gegenwart von organischen Carbonsäureanhydriden als Promotor durchgeführt. Vorteilhafterweise verwendet man solche Carbonsäureanhydride, die sich von aliphatischen oder aromatischen, Poly- und/oder vorzugsweise Monocarbonsäuren mit 2 bis 12, vorzugsweise 2 bis 8 Kohlenstoffatomen ableiten. Genannt seien beispielsweise Anhydride von aliphatischen Carbonsäuren mit 2 bis 12 Kohlenstoffatomen, die gegebenenfalls auch olefinisch ungesättigte Bindungen enthalten können, wie Buttersäureanhydrid, Valeriansäureanhdyrid, Capronsäureanhydrid, Caprylsäureanhydrid, Pelargonsäureanhydrid, Acrylsäureanhydrid und vorzugsweise Propionsäureanhydrid und Essigsäureanhydrid, Anhydride von aromatischen und aliphatischen Polycarbonsäuren, insbesondere Dicarbonsäuren, wie Phthalsäureanhydrid, Naphthalinsäureanhydrid und vorzugsweise Bernsteinsäure- und Maleinsäureanhydrid. Da die erfindungsgemäß hergestellten Polyoxybutylen-polyoxyalkylenglykolcarbonsäurediester für die meisten Anwendungen in die entsprechenden Glykole übergeführt werden, verwendet man in der Praxis vorzugsweise Carbonsäureanhydride mit einer niederen Zahl an C-Atomen. Aus Preisgründen und Gründen der leichten Zugänglichkeit wird Essigsäureanhydrid bevorzugt. Selbstverständlich sind auch gemischte Anhydride und Mischungen der oben genannten Anhydride verwendbar.

Bleicherden werden z.B. beschrieben in Ullmann's Enzyklopädie der technischen Chemie, 3. Auflage, Band IV, Seiten 541 bis 545. Als Katalysatoren geeignete natürliche oder synthetische Bleicherden sind insbesondere Aluminiumhydrosilikate oder Aluminium-Magnesiumhydrosilikate vom Typ des Montmorrillonits, die durch Säure aktiviert sein können und z.B. unter dem Namen "Tonsil®" im Handel sind. Synthetische Bleicherden werden z.B. in der GB-A-854 958 beschrieben. Zur Herstellung der erfindungsgemäß verwendbaren, im wesentlichen wasserfreien Bleicherden werden handelsübliche wasserhaltige Bleicherden bei Temperaturen von 100 bis 200°C, vorzugsweise von 110 bis 150°C, in 1 bis 8 Stunden, vorzugsweise 2 bis 4 Stunden, bei Normaldruck oder vorzugsweise unter vermindertem Druck entwässert. Die erfindumgsgemäß als Katalysatoren verwendbaren, im wesentlichen wasserfreien Bleicherden besitzen Wassergehalte von weniger als 3 Gew.%, vorzugsweise von 0,001 bis 1,5 Gew.%, und insbesondere von 0,1 bis 1,0 Gew.%. Für die Copolymerisation des Tetrahydrofurans und der 1,2-Alkylenoxide werden nur geringe Mengen der im wesentlichen wasserfreien Bleicherden benötigt. Die Copolymerisation kann mit in der Polymerisationsmischung suspendierter wasserfreier Bleicherde durchgeführt werden. Vorteilhafte Ergebnisse werden erzielt, wenn man sie, bezogen auf den gesamten Polymerisationsansatz in einer Menge von 1 bis 20 Gew.%, vorzugsweise 5 bis 10 Gew.%, einsetzt. Natürlich können auch grössere und kleinere Mengen verwendet werden.

Die suspendierten Bleicherden können durch gebräuchliche physikalische Trennmethoden, wie z.B. Filtrieren oder Zentrifugieren, aus der Polymerisationsmischung abgetrennt und erneut für eine beliebige Anzahl weiterer Polymerisationen verwendet werden. Diese Abtrennung macht jedoch einen kostspieligen technischen Aufwand erforderlich und führt gelegentlich zu verfärbten Copolymerisaten, wenn bei der Katalysatorabtrennung und Rückführung die Atmosphäre nicht vollständig ausgeschlossen werden kann. Durch Einwirkung atmosphärischer Feuchtigkeit kann der Katalysator zudem inaktiviert werden.

Nach einer bevorzugten Ausführungsform wird daher die im wesentlichen wasserfreie Bleicherde als Formkörper verpreßt in einem festen Katalysatorbett angeordnet und mit der Copolymerisationsmischung in Kontakt gebracht oder insbesondere in einem Röhrenreaktor fest angeordnet und von der Copolymerisationsmischung durchströmt.

Zur Herstellung der Katalysatorformkörper werden die handelsüblichen wasserhaltigen Bleicherden mit Bindemitteln, insbesondere Wasser, verknetet und zu Formkörpern verpreßt. Anschließend werden die wasserhaltigen Formkörper oberhalb 100°C, vorzugsweise bei Temperaturen von 150 bis 700°C, bei Normaldruck oder unter vermindertem Druck, gegebenenfalls in Gegenwart von unter den Reaktionsbedingungen inerten Gasen, z.B. Edelgasen, wie Helium oder Argon, oder insbesondere Stickstoff auf die obengenannten Wassergehalte entwässert.

Die verpreßten Bleicherden können beispielsweise die Form von Kugeln, Ringen, Zylindern oder Tabletten aufweisen. Bei Verwendung von kugelförmigen Bleicherdeformkörpern weisen die Kugeln im allgemeinen Durchmesser von 2 bis 15 mm, vorzugsweise 3 bis 6 mm auf. Als zylinderförmige Formkörper werden im allgemeinen Zylinder mit einer Länge von 2 bis 15 mm und einem Durchmesser von 2 bis 6 mm verwendet. Nicht kugel- oder zylinderförmige Formkörper weisen im allgemeinen ein Volumen auf, das dem der zylinderförmigen Formkörper entspricht.

Die trockenen Bleicherde-Formkörper werden in einem Reaktionsgefäß, beispielsweise einem Röhren- oder Schachtofen, aufgeschüttet. Die gewählte Dimension der Katalysatorschüttung wird vorzugsweise von der Möglichkeit bestimmt, die Polymerisationswärme abzuführen.

Die Reaktionsgefäße, die im allgemeinen säulenförmig sind, können einen Querschnitt in beliebiger Form, beispielsweise in Form eines Quadrates oder einer Ellipse, aufweisen. Vorzugsweise verwendet man jedoch langgestreckte, zylinderförmige Reaktionsgefäße. Das Verhältnis von Innendurchmesser zu Länge des Reaktionsgefäßes beträgt im allgemeinen 1:2 bis 1:100, vorzugsweise 1:10 bis 1:40. Die Reaktionsgefäße können senkrecht oder waagrecht ausgerichtet sein und auch Zwischenlagen einnehmen. Vorzugsweise verwendet werden jedoch senkrecht stehende Röhrenofen, bei denen der Rohrdurchmesser etwa 10 bis 100 mm beträgt. Legt man weniger Wert auf eine genaue Temperaturführung bei der Polymerisation, so können als Reaktionsgefäß auch einfache Schachtöfen mit oder ohne Produktrückführung eingesetzt werden.

Überraschenderweise zeigte sich, daß zu Formkörpern verpreßte und oberhalb 100°C getrockneten Bleicherden, die in ein stationäres, fest angeordnetes Katalysatorbett eingebracht werden, durch die zu polymerisierende Mischung aus Tetrahydrofuran, 1,2-Alkylenoxid und Carbonsäureanhydrid nicht zerstört werden, sondern über ungewöhnlich lange Zeiträume, beispielsweise von mehr als 1 Jahr, ihre ursprüngliche feste Form erhalten und keinerlei Abrieb zeigen. Außerdem ist das, das Katalysatorbett verlassende Endprodukt praktisch frei von anorganischen Verunreinigungen. Eine kontinuierliche Verfahrensdurchführung wird dadurch sehr einfach, so daß man streng reproduzierbar - insbesondere hinsichtlich der Farbe und des Polymerisationsgrades - Polyoxybutylen-polyoxyalkylenglykolcarbonsäurediester herstellen kann. Da ferner der Katalysatorverlust vernachlässigbar gering ist, ist das Verfahren besonders umweltfreundlich.

Mit Hilfe des erfindungsgemäßen Copolymerisationsverfahrens können Carbonsäurediester von Polyoxybutylenpolyoxyalkylenglykolen mit beliebigen Polymerisationsgraden, beispielsweise von 2 bis 200, vorzugsweise von 10 bis 70, hergestellt werden, die nach der Hydrolyse Polyoxybutylenpolyoxyalkylenglykole mit mittleren Molekulargewichten von ungefähr 130 bis 15 000, vorzugsweise von 500 bis 3500, ergeben. Der Polymerisationsgrad wird im wesentlichen bestimmt durch die Carbonsäureanhydrid-Konzentration in der Polymerisationsmischung. Je niedriger die Carbonsäureanhydrid-Konzentration gewählt wird, umso höhere Molekulargewichte werden erreicht und umgekehrt. Da die Polymerisationsgrade auch von den Eigenschaften der im wesentlichen wasserfreien Bleicherden bestimmt werden, ist es im allgemeinen erforderlich, für eine bestimmte Bleicherde und eine gewählte Temperatur die Säureanhydrid-Konzentration zu ermitteln, die das gewünschte Molekulargewicht ergibt. Auch das Monomeren-Verhältnis von Tetrahydrofuran zu 1,2-Alkylenoxid beeinflußt das Molekulargewicht. Da die Art der verwendeten im wesentlichen wasserfreien Bleicherde jedoch einen geringeren Einfluß auf das Molekulargewicht hat, als das Molverhältnis von Tetrahydrofuran zu 1,2-Alkylenoxid, soll hier als Orientierung beispielsweise folgender Wert angegeben werden: Aus einer für die Polymerisation vorgesehenen Lösung von 92 Mol.% Ethylenoxid, 2 Mol.% Tetrahydrofuran und 6 Mol.% Essigsäureanhydrid erhält man bei der Polymerisationstemperatur von 25°C ein Mischpolymerisat mit dem Molekulargewicht 1000. Verdoppelt man die Anhydrid-Konzentration und hält das Verhältnis der Monomeren konstant, so entsteht bei derselben Reaktionstemperatur ein Polymerisat mit dem Molekulargewicht von etwa 650.

Zur Durchführung der Copolymerisation im Katalysatorfestbett werden im wesentlichen wasserfreie Bleicherdeformkörper enthaltende Reaktionsgefäße mit einer Mischung aus Tetrahydrofuran, 1,2-Alkylenoxid oder -mischungen und Carbonsäureanhydrid nach bekannten Reaktionsmethoden, beispielsweise nach der Riesel- oder Sumpffahrweise, in Kontakt gebracht. Bevorzugt wird die Sumpffahrweise, bei der das gesamte Katalysatorvolumen in Abwesenheit einer Gasphase von der Polymerisationsmischung aus den genannten 3 Komponenten durchströmt wird. Die Polymerisationswärme kann durch geeignet angebrachte Kühlaggregate im Polymerisationsturm oder mittels eines im Parallelschluß betriebenen, außen liegenden Kühlers abgeführt werden.

Die Copolymerisation wird zweckmäßigerweise in einem fest angeordneten Katalysatorbett bei Temperaturen von 20 bis 70°C, vorzugsweise von 35 bis 64°C bei Normaldruck durchgeführt. Bei Anwendung von Druck kann die Copolymerisationstemperatur auch höher liegen. Copolymerisationsmischungen mit einem hohen Ethylenoxidanteil werden zweckmäßigerweise unter erhöhtem Druck copolymerisiert. Die Verweilzeiten betragen üblicherweise 5 bis 50 Stunden, vorzugsweise 8 bis 30 Stunden.

Die das Reaktionsgefäß verlassende Reaktionsmischung enthält neben den Carbonsäurediestern der Polyoxybutylenpolyoxyalkylen-glykole, je nach den angewandten Reaktionsbedingungen beispielsweise in Abhängigkeit von der Katalysatoraktivität, der Verweilzeit am Katalysator und der Reaktionstemperatur, z.B. 15 bis 30 Gew.% nicht umgesetztes Alkylenoxid, weniger als 1 Gew.% nicht umgesetztes Carbonsäureanhydrid, die durch eine einfache Destillation, gegebenenfalls unter vermindertem Druck, abgetrennt und gegebenenfalls rückgeführt werden können. Das eingesetzte Tetrahydrofuran dagegen wird meist vollständig in den Polyoxybutylen-polyoxyalkylenglykolcarbonsäurediester einpolymerisiert.

Die nach dem erfindungsgemäßen Verfahren hergestellten Polyoxybutylen-polyoxyalkylenglykolcarbonsäurediester können in an sich bekannter Weise durch Verseifung, beispielsweise mit Calciumoxid und/oder -hydroxid als Katalysator, oder vorzugsweise durch Umesterung, beispielsweise mit Methanol analog den Angaben der US-A-2 499 725 oder gemäß Journal of American Chemical Society, Vol. 70, Seite 1842 in die entsprechenden Glykole übergeführt werden.

Die erhaltenen Polyoxybutylenpolyoxyalkylenglykole, insbesondere solche mit Molekulargewichten von 500 bis 3000, eignen sich vorzüglich zur Herstellung von Polyurethanen oder Polyestern. Sie verleihen beispielsweise den Polyurethanen ein sehr hohes mechanisches Eigenschaftsniveau. Im Vergleich zu Polytetramethyleneetherglykolen besitzen sie einen niedrigen Erstarrungspunkt und können daher vorwiegend in flüssiger Form verarbeitet werden, ohne daß zuvor kostspielige Verflüssigungs- oder Schmelzprozesse durchgeführt werden müssen.

Das folgende Beispiel soll das erfindungsgemäße Verfahren näher erläutern. Die genannten Teile sind Gewichtsteile; sie verhalten sich zu Volumenteilen wie Kilogramm zu Litern.

**Beispiel**

Aus marktgängigen Propylenoxid, Essigsäureanhydrid und Tetrahydrofuran wurde eine homogene Mischung hergestellt, die aus 90 Mol.% Propylenoxid, 4 Mol.% Tetrahydrofuran und 6 Mol.% Essigsäureanhydrid bestand.

Aus käuflicher Bleicherde (®Tonsil Optimum FF, Süd-Chemie AG, München) wurden Strangpreßlinge mit einem Durchmesser von 2 bis 3 mm und einer durchschnittlichen Länge von 4 mm hergestellt und 4 Stunden bei 200°C getrocknet.

Ein mit einem thermostatisiertem Kühlmantel versehenes Reaktionsrohr mit einem Volumen von 1000 Volumenteilen und einem Verhältnis von Durchmesser zu Länge von etwa 5:70 wurde mit den obenbeschriebenen getrockneten Strangpreßlingen gefüllt. Der Polymerisationsreaktor befand sich in einem stationären Reaktionszustand, der folgendermaßen eingestellt war. Das oben beschriebene Gemisch aus Propylenoxid, Tetrahydrofuran und Essigsäureanhydrid wurde dem Reaktionsrohr von oben zugeführt, mit einer Geschwindigkeit von 2000 Gew.-Teilen pro Stunde am unteren Ende des Reaktionsrohres herausgepumpt, über einen Wärmetauscher gegeben, der bei 35°C gehalten wurde, und dann über das obere Ende dem Reaktionsrohr wieder zugeführt. Kurz vor Eintritt in das Reaktionsrohr wurden zum Reaktionskreislauf stündlich 100 Teile eines Frischzulaufes, der oben für das Ausgangsgemisch angegebenen Zusammensetzung gegeben. Der Kühlmantel des Reaktionsrohres wurde von einem Kühlmedium durchströmt, dessen Temperatur auf 15 bis 20°C gehalten wurde. Am unteren Ende des Reaktionsrohres befand sich ein seitlicher Abgang, der zu einem Siphon führte, der der Höhe des gefüllten Reaktionsrohres entsprach. Aus diesem Reaktionsrohr floß fertige Reaktionsmischung im Ausmaß der durch den Frischzulauf bedingten Volumenzunahme ab. Der Siphon war so hoch gezogen, daß das Reaktionsrohr in Abwesenheit einer oberen Gasphase - also ganz mit Flüssigkeit gefülltbetrieben werden konnte. Wurde der erhaltene Reaktionsaustrag durch Verdampfen von nicht umgesetztem Propylenoxid unter Normaldruck und im Vakuum befreit, so erhielt man stündlich 48 Teile eines Copolymerisats, das aus ca. 80 Mol.% Propylenoxid aufgebaut war. Der Polyoxybutylen-polyoxyalkylenglykolcarbonsäurediester hatte ein mittleres Molekulargewicht - berechnet aus der Esterzahl - von 1150. Durch Umesterung mit Methanol in Gegenwart von 0,01 Gew.% Natriummethylat erhielt man das entsprechende Polyoxybutylenpolyoxyalkylenglykol, das nach den üblichen Methoden mit Isocyanaten zu Polyurethanen oder mit Dicarbonsäuren zu Polyester verarbeitet werden konnte.

**Patentansprüche**

1. Verfahren zur Herstellung von Polyoxybutylen-polyoxyalkylenglykolcarbonsäurediester durch katalytische Copolymerisation von Tetrahydrofuran mit mindestens einem 1,2-Alkylenoxid, dadurch gekennzeichnet, daß man die Copolymerisation in Gegenwart von Carbonsäureanhydrid mit Bleicherde mit einem Wassergehalt von weniger als 3 Gew.% als Katalysator durchführt, wobei man das 1,2-Alkylenoxid im molaren Überschuß, bezogen auf das Tetrahydrofuran, anwendet.

2. Verfahren nach Anspruch 1, dadurch gekennzeichnet, daß man als 1,2-Alkylenoxide Ethylenoxid und/oder 1,2-Propylenoxid verwendet.

3. Verfahren nach Anspruch 1, <u>dadurch gekennzeichnet</u>, daß das Molverhältnis 1,2-Alkylenoxid zu Tetrahydrofuran in der copolymerisierbaren Monomerenmischung > 1:1 bis 100:1 beträgt.

4. Verfahren nach Anspruch 1, <u>dadurch gekennzeichnet</u>, daß man als Carbonsäureanhydrid Acetanhydrid verwendet.

5. Verfahren nach Anspruch 1, <u>dadurch gekennzeichnet</u>, daß die Bleicherde einen Wassergehalt von 0,001 bis 1,5 Gew.% aufweist.

6. Verfahren nach Anspruch 1, <u>dadurch gekennzeichnet</u>, daß die Bleicherde in einem festen Katalysatorbett angeordnet ist und mit einer Mischung aus Tetrahydrofuran, 1,2-Alkylenoxid und Carbonsäureanhydrid in Kontakt gebracht wird.

7. Verfahren nach Anspruch 1, <u>dadurch gekennzeichnet</u>, daß die Bleicherde in einem Röhrenreaktor fest angeordnet ist und von einer Mischung aus Tetrahydrofuran, 1,2-Alkylenoxid und Carbonsäureanhydrid durchströmt wird.

8. Verfahren nach Anspruch 1, <u>dadurch gekennzeichnet</u>, daß die Copolymerisation bei einer Reaktionstemperatur von 20 bis 70°C unter Normaldruck durchgeführt wird.

9. Verfahren nach Anspruch 1, <u>dadurch gekennzeichnet</u>, daß der Wassergehalt der Mischung aus Tetrahydrofuran und 1,2-Alkylenoxid kleiner als 0,2 Gew.% beträgt.

10. Verfahren nach Anspruch 1, <u>dadurch gekennzeichnet</u>, daß die Bleicherde mit einem Wassergehalt von 0,001 bis 1,5 Gew.% in einem Röhrenreaktor fest angeordnet ist und von einer Mischung aus Tetrahydrofuran, Ethylenoxid und/oder 1,2-Propylenoxid und Acetanhydrid durchströmt wird.

**Revendications**

1. Procédé pour la préparation de diesters d'acide carboxylique et de polyoxybutylène-polyoxyalkylèneglycols par copolymérisation catalytique de tétrahydrofuranne avec au moins un oxyde de 1,2-alkylène, caractérisé en ce qu'on mène la copolymérisation en présence d'anhydride d'acide carboxylique avec une argile décolorante ayant une teneur en eau de moins de 3 % en poids en tant que catalyseur, l'oxyde de 1,2-alkylène étant utilisé en excès molaire par rapport au tétrahydrofuranne.

2. Procédé selon la revendication 1, caractérisé en ce qu'on utilise, en tant qu'oxydes de 1,2-alkylènes, l'oxyde d'éthylène et/ou l'oxyde de 1,2-propylène.

3. Procédé selon la revendication 1, caractérisé en ce que le rapport molaire de l'oxyde de 1,2-alkylène au tétrahydrofuranne dans le mélange de monomères copolymérisable est compris entre plus de 1 : 1 et 100 : 1.

4. Procédé selon la revendication 1, caractérisé en ce qu'on utilise, comme anhydride d'acide carboxylique, l'anhydride acétique.

5. Procédé selon la revendication 1, caractérisé en ce que l'argile décolorante présente une teneur en eau de 0,001 à 1,5 % en poids.

6. Procédé selon la revendication 1, caractérisé en ce que l'argile décolorante est disposée en un lit catalytique fixe et est mise en contact avec un mélange de tétrahydrofuranne, d'oxyde de 1,2-alkylène et d'anhydride d'acide carboxylique.

7. Procédé selon la revendication 1, caractérisé en ce que l'argile décolorante est disposée en position fixe dans un réacteur tubulaire et est traversée par un mélange de tétrahydrofuranne, d'oxyde de 1,2-alkylène et d'anhydride d'acide carboxylique.

8. Procédé selon la revendication 1, caractérisé en ce que la copolymérisation est menée à une température de réaction de 20 à 70°C sous la pression atmosphérique standardisée.

9. Procédé selon la revendication 1, caractérisé en ce que la teneur en eau du mélange de tétrahydrofuranne et d'oxyde de 1,2-alkylène est inférieure à 0,2 % en poids.

10. Procédé selon la revendication 1, caractérisé en ce que l'argile décolorante, ayant une teneur en eau de 0,001 à 1,5 % en poids,est disposée en position fixe dans un réacteur tubulaire et est traversée par un mélange de tétrahydrofuranne, d'oxyde d'éthylène et/ou d'oxyde de 1,2-propylène et d'anhydride acétique.

**Claims**

1. A process for the preparation of a polyoxybutylene polyoxyalkylene glycol dicarboxylate by catalytic copolymerization of tetrahydrofuran with at least one 1,2-alkylene oxide, wherein the copolymerization is carried out in the presence of a carboxylic anhydride using, as catalyst, a bleaching earth containing less than 3% by weight of water, and the 1,2-alkylene oxide is employed in a molar excess, based on the tetrahydrofuran.

2. A process as claimed in claim 1, wherein ethylene oxide and/or 1,2-propylene oxide are used as the 1,2-alkylene oxides.

3. A process as claimed in claim 1, wherein the molar ratio of 1,2-alkylene oxide to tetrahydrofuran in the copolymerizable monomer mixture is from > 1:1 to 100:1.

4. A process as claimed in claim 1, wherein the carboxylic anhydride used is acetic anhydride.

5. A process as claimed in claim 1, wherein the bleaching earth contains from 0.001 to 1.5% by weight of water.

6. A process as claimed in claim 1, wherein the bleaching earth is arranged as a fixed catalyst bed and is brought into contact with a mixture of tetrahydrofuran, a 1,2-alkylene oxide and a carboxylic anhydride.

7. A process as claimed in claim 1, wherein the bleaching earth is arranged as a fixed bed in a tubular reactor, a mixture of tetrahydrofuran, a 1,2-alkylene oxide and a carboxylic anhydride flowing through the said bed.

8. A process as claimed in claim 1, wherein the copolymerization is carried out at from 20 to 70°C under atmospheric pressure.

9. A process as claimed in claim 1, wherein the water content of the mixture of tetrahydrofuran and 1,2-alkylene oxide is less than 0.2% by weight.

10. A process as claimed in claim 1, wherein the bleaching earth having a water content of from 0.001 to 1.5 % by weight is arranged as a fixed bed in a tubular reactor, a mixture of tetrahydrofuran, ethylene oxide and/or 1,2-propylene oxide and acetic anhydride flowing through the said bed.